# EUROPEAN PATENT APPLICATION

(11) **EP 4 374 956 A1**
(43) Date of publication of application: **29.05.2024**
(21) Application number: 23209770.9
(22) Date of filing: 14.11.2023
(51) Int. Cl.: B01F 27/07, B01F 27/2124, B01F 27/213, B01F 27/91, F16C 3/02, F16D 1/06

(54) **PROPELLER MIXER**

(30) Priority: 17.11.2022 IT 202200023715
(71) Applicant: Mitho S.r.l., 25125 Brescia (IT)
(72) Inventor: ZAMBELLI, Stefano, I-25125 BRESCIA (IT); BONTEMPI, Andrea, I-25125 BRESCIA (IT); GUERRINI, Bernardino, I-25125 BRESCIA (IT)
(74) Representative: Long, Giorgio

(57) **Abstract**

The present invention relates to an apparatus for mixing liquids or semiliquids, in particular to a so called fast stirrer.

In particular, the invention relates to a device for mixing/stirring (1) a liquid or semiliquid contained in a vessel/reactor, comprising a motor (2) having a shaft (2a) for transmitting a rotary motion, an stirring shaft (3) having a proximal end (3a) and a distal end (3b), an impeller (4) being associated with said distal end (3b), characterized in that the device (1) comprises a removable connection element (5) between said motor (2) and said stirring shaft (3) .

## Description

The present invention relates to an apparatus for mixing liquids or semiliquids, in particular to a so called fast stirrer.

Mixing liquids or semiliquids is a very common operation present in many application fields such as, for example, the food or pharmaceutical sector, the varnish sector, polymeric compounds or generally the chemical sector.

When mixing is to be carried out in a batch vessel or reactor, i.e. to prepare discrete batches of a product, mixers are used, also known as stirrers which, placed above the vessel, draw with an impeller in the mass to be mixed or stirred. Depending on the amount of product and/or its viscosity, as well as mixing or stirring needs, slow or fast mixers can be used, the latter being smaller in size and more cost-effective.

Said stirrers consist of a motor on which a suspension system for anchoring to the vessel, a shaft rotated by the motor, and an impeller, for example a propeller, associated with the distal end of the shaft are installed. The shaft length depends on the size and depth of the vessel or reactor where the stirrer has to be installed, therefore as they are non-standard features, various different lengths are to be envisaged during production.

When performing a special maintenance on the stirrer is required, for example in the case of a shaft failure or unrepairable motor breakdown, or if there is a need to apply the stirrer to a different vessel/reactor type, the stirrer adaptation or repair may become complex and cost prohibitive especially in the case of fast stirrers which, as said, are relatively cost-effective per se. As such, in such cases replacing the stirrer in its entirety can be more convenient.

The problem underlying the present invention is therefore to provide a mixer/stirrer, in particular a fast stirrer, that overcomes said inherent drawbacks in the prior art.

Such a problem is solved by a mixing/stirring device as defined in the appended claims, whose definitions are integral part of the present description.

The subject matters of the present invention are:
1) a device for mixing/stirring a liquid or semiliquid contained in a vessel/reactor, comprising a motor having a shaft for transmitting a rotary motion, an stirring shaft having a proximal end and a distal end, an impeller being associated with said distal end, characterized in that the device comprises a removable connection element between said motor and said stirring shaft;
2) a device as in point 1), wherein the stirring shaft has a length which can vary depending on the application needs of the mixing/stirring device, so that the impeller can mix/stir the liquid or semiliquid contained in the vessel/reactor, for example in proximity of the bottom of the latter;
3) a device as in point 1) or 2), wherein the stirring shaft comprises a body extending between said proximal end and said distal end;
4) a device as in any one of points 1) to 3), wherein the proximal end of the stirring shaft is truncated conical in shape, and is configured to be coupled with the connection element;
5) a device as in points 3) and 4), wherein the proximal end is connected to the body of the stirring shaft through an annular portion, having a diameter larger than the diameter of the proximal end base, and through an annular groove placed between the annular portion and the body;
6) a device as in any one of points 1) to 5), wherein the proximal end is associated with a flange comprising holes for fastening to the connection element;
7) a device as in points 5) and 6), wherein the flange is fastened up to a stop at the annular portion through a circlip inserted in the annular groove;
8) a device as in any one of points 1) to 7), wherein the connection element comprises a cylindrical body having a first end and a second end, wherein a coupling flange provided with through holes extends perpendicularly outwards from the second end, such that the coupling flange can be coupled with the flange of the proximal end of the stirring shaft by means of screws introduced through the respective holes, which can be in a threaded or through hole variant for fastening by a nut screw system;
9) a device as in point 8), wherein the cylindrical body is hollow, and comprises a first cylinder-shaped cavity which opens outwards at the first end, and a second truncated cone-shaped cavity which opens outwards at the second end, the first and the second cavities being divided by a septum wherein a threaded through hole is drilled to introduce a fastening screw, wherein the fastening screw is screwed in an axial threaded hole present in turn on the motor transmission shaft, so as to provide for fastening thereto;
10) a device as in point 8) or 9), wherein the connection element edge at the first end comprises a socket configured to accommodate a pin for rotary fastening of the motor transmission shaft to the connection element and therefore to the stirring shaft;
11) a device as in any one of points 1) to 10), wherein the distal end of the stirring shaft is configured to be coupled with the impeller, and comprises a proximal portion, adjacent to the stirring shaft, and a distal portion, wherein:
   - a radial blind hole is placed at the proximal portion for introducing a pin for motion transmission to the impeller, and wherein
   - the distal portion comprises an external thread for a nut screw system;
12) a device as in point 11), wherein the impeller comprises a cylindrical element from which blades radiate outwards, wherein the blades, preferably three in number, are arranged in an out-of-phase inclined manner to form a helical structure, the cylindrical element comprising a longitudinal through hole configured to house the distal portion of the distal end of the stirring shaft, and a socket for pin accommodation;
13) a device as in any one of points 1) to 12), wherein the motor is a rotary electric motor able to impart a rotational speed ranging from 800 and 1500 rpm to the transmission shaft.

Additional features and advantages of the present invention will become more evident from the description of some exemplary embodiments, provided hereinafter by way of non limiting indication, by referring to the following figures:

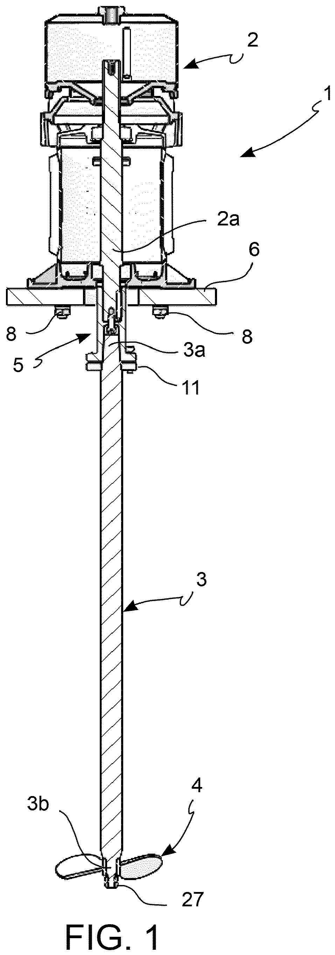

figure 1 represents a longitudinal cross-sectional view of the mixing/stirring device according to the invention;

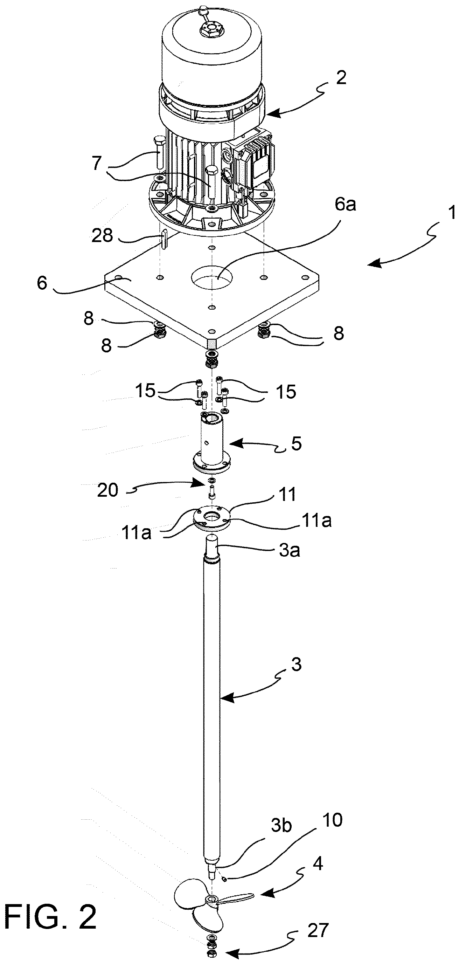

figure 2 represents an exploded perspective view of the device of figure 1;
figure 3 represents a longitudinal cross-sectional view of the connection element between the motor and the impeller shaft according to the present invention;
figure 4 represents a perspective view of the connection element of figure 3;
figures 5 represents a bottom view of the connection element of figures 3 and 4;
figure 6 represents a perspective view of the impeller of the device of figure 1;
figure 7 represents a lateral partially cross-sectional view of the shaft of the device of figure 1;
figure 8 represents a longitudinal cross-sectional view of the connection element between the motor and the impeller shaft according to a different embodiment.

By referring to the figures, the mixing/stirring device according to the invention, indicated in its entirety by number 1, comprises a motor 2, a stirring shaft 3 having a proximal end 3a and a distal end 3b, an impeller 4 being associated with said distal end 3b, and a connection element 5 between said motor 2 and said stirring shaft 3.

The motor 2 is preferably a rotary electric motor and comprises a transmission shaft 2a. In the case of fast stirrers, the motor 2 will be able to impart a rotational speed preferably ranging from 800 and 1500 rpm to the transmission shaft.

The motor 2 is fastened to a support plate 6, which in turn may be fastened to a proper suspension system (not shown) on a vessel or reactor with which the mixing/stirring device 1 will have to be coupled. The motor 2 is fastened in a removable manner to the support plate 6 by screw-nut screw systems 7, 8.

The support plate 6 comprises a central hole 6a allowing for the insertion of the transmission shaft 2a and connection element 5.

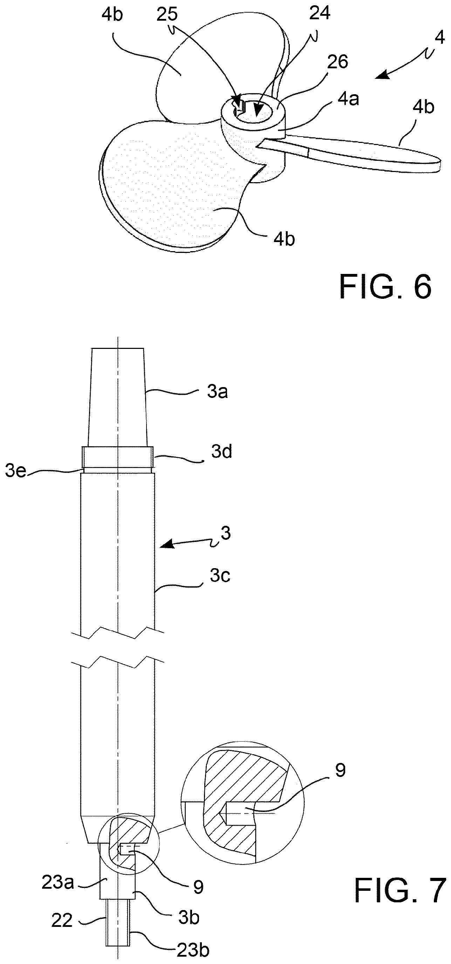

The stirring shaft 3, shown in detail in figure 7, has a length which can vary depending on the application needs of the mixing/stirring device 1, such that the impeller 4 can draw in the liquid or semiliquid contained in the vessel/reactor, for example in proximity of the bottom of the latter.

As said above, the stirring shaft 3 comprises a proximal end 3a and a distal end 3b. The body 3c of the stirring shaft 3 extends between proximal 3a and distal 3b ends.

The proximal end 3a of the stirring shaft 3 is truncated conical in shape, and is configured to be coupled with the connection element 5, as it will be said below. The proximal end 3a is connected to the body 3c of the stirring shaft 3 through a threaded annular portion 3d, having a diameter larger than the diameter of the proximal end 3a base, and through an annular groove 3e placed between the annular portion 3d and the body 3c.

A flange 11 is further associated with the proximal end 3a.

According to the embodiment shown in the drawings, the flange 11 is screwed on the threaded annular portion 3d, abutting against the body of the stirring shaft 3c. The annular groove 3e is a relief for being capable of threading the annular section 3d.

In a variation, the flange 11 is inserted from the bottom of the stirring shaft up to the annular portion 3d, which is modified so as to become a stop and then an arrest section for the flange 11. At this point, the annular section 3e will be modified so as to be a seat for a circlip, or an equivalent elastic ring, which will block the flange 11 movement, which at this point will be integral with and constrained to the stirring shaft 3.

In other embodiments, wherein it will be possible for the annular groove 3e to be omitted, the flange 11 will be welded at the annular portion 3d, or body 3c, or it will be possible for it to be formed in one-piece with the body 3c.

The flange 11 further comprises holes 11a (four holes in the drawing) for fastening to the connection element 5, which can be in a threaded or through hole variant for fastening by a nut screw system.

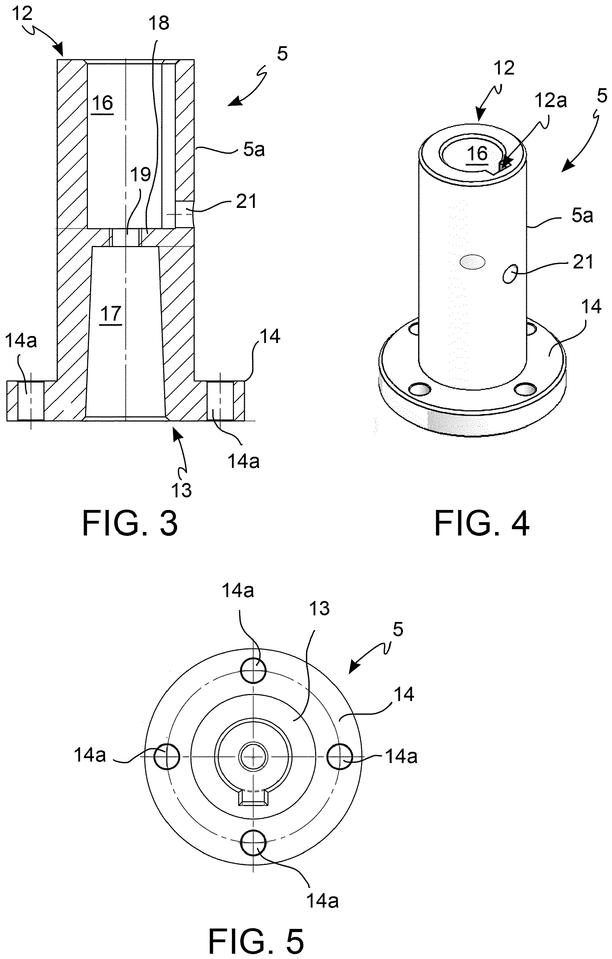

The connection element 5, shown in detail in figures 3-5, comprises a cylindrical body 5a having a first end 12 and a second end 13. A coupling flange 14 provided with through holes 14a (four holes in the drawings) extends perpendicularly outwards from the second end 13, such that the coupling flange 14 can be coupled to the flange 11 of the proximal end 3a of the stirring shaft 3 by means of screws 15 inserted through the respective holes 11a, 14a.

The cylindrical body 5a is hollow, and comprises a first cylinder-shaped cavity 16 which opens outwards at the first end 12, and a second truncated cone-shaped cavity 17 which opens outwards with a flare at the second end 13. The first and the second cavities 16, 17 are divided by a septum 18 wherein a threaded through hole 19 is drilled to introduce a fastening screw 20. The fastening screw 20 is screwed in an axial threaded hole present in turn on the motor 2 transmission shaft 2a, so as to provide for fastening thereto. The threaded through hole 19 present in the septum 18 is for the next extraction through an accessory screw (not shown) of the element 5 from coupling with the motor 2 transmission shaft 2a. In particular, the through hole 19 is threaded with a thread larger than the one obtained in the motor 2 transmission shaft 2a, to allow for the next element 5 extraction through a screw (not shown and accessory) which in the process of screwing acts as an extractor when finding a limit stop in the motor 2 transmission shaft 2a.

The truncated conical shape of the second cavity 17 is configured for a shape coupling with the first end 3a of the stirring shaft 3, hence realizing a self-centering.

The connection element 5 edge at the first end 12 comprises a socket 12a, configured to accommodate a pin 28, that can be inserted in another socket (not visible) of the motor 2 transmission shaft 2a, for transmitting a rotary motion from the latter to the connection element 5, and then to the stirring shaft 3.

A through hole 21 is performed on the body 5a at the first cavity 16. It serves as a service hole for the correct use of the equipment tool realizing the socket 12a. The equipment is a slotting machine, and it takes away the chip by vertical motion as it planes or files the wall to be worked, generally a hub. When this "filing" is not required to be through and therefore along the entire component length, like in the present case, the machining chip gradually builds up on the worked part bottom, and leads to tool failure when reaching a certain thickness. The through hole 21 allows for chip removal. The through hole 21 could be omitted if the connection element 5 could be made entirely by moulding or melting.

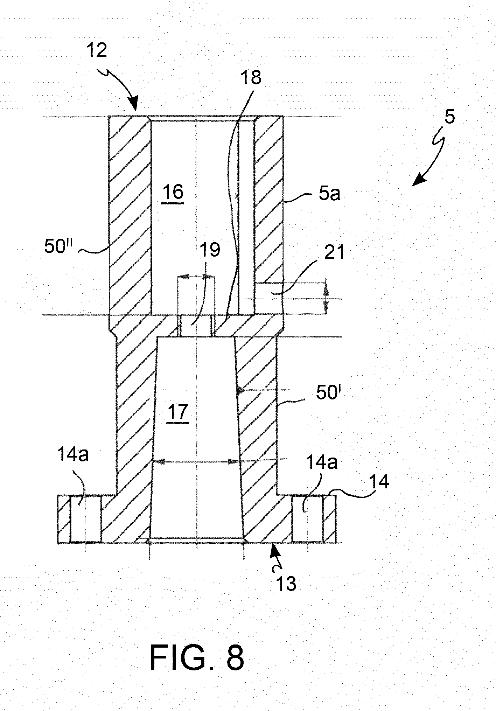

In a variation shown in figure 8, the cylindrical body 5a comprises a first portion 50' and a second portion 50", wherein the second portion 50", extending between the septum 18 and the first end 12, has an increased external diameter. Such increase allows to establish, while maintaining the same construction form, a dimensional compatibility of the connection element 5 cavity 16 with the shafts from major motor sizes for fast stirrers on the market. In other words, the thickening of the second portion 50" wall also allows to obtain larger cavities 16 in diameter.

The distal end 3b of the stirring shaft 3 is configured to be coupled with the impeller 4, and comprises a proximal portion 23a adjacent to the body 3c of the stirring shaft, and a distal portion 23b.

A radial blind hole 9 is placed at the proximal portion 23a, for introducing a pin 10 for motion transmission to the impeller 4.

The distal portion 23b comprises an external thread 22.

The impeller 4 comprises a cylindrical element 4a from which blades 4b radiate outwards. The blades 4b, preferably three in number, are arranged in an out-of-phase inclined manner, to form a helical structure.

The cylindrical element 4a comprises a longitudinal through hole 24 configured to house the distal portion 23b of the distal end 3b of the stirring shaft 3, and a socket 25, placed at an edge 26, for pin 10 accommodation.

The removable fastening of the impeller 4 to the stirring shaft 3 occurs by introducing the distal portion 23b of the distal end 3b of the latter in the longitudinal through hole 24 of the impeller 4 and by fastening the assembly by a nut screw system 27.

The advantages of the invention are evident from the foregoing.

In particular, the configuration of the connection element 5 removably fastened both to the motor 2 and the stirring shaft 3, in the case of failure or irreversible breakdown, allows to possibly intervene or independently replace both the motor 2 and the stirring shaft 3, with no need to replace the entire mixing/stirring device 1.

The truncated conical shape of the proximal end 3a of the stirring shaft 3 and the related cavity 17 of the connection element 5 allows for an easy stirring shaft 3 centering with the motor 2 transmission shaft 2a.

It is apparent that only some particular embodiments of the present invention have been described, to which those skilled in the art will be able to apply all the modifications required for its adaptation to particular applications, however without departing from the scope of protection of the present invention.

For example, in a variant, the second cavity 17 of the connection element 5, and the proximal end 3a of the stirring shaft 3 are cylindrical in shape and the centering can be obtained by a guide pin.

## Claims

1. A device (1) for mixing/stirring a liquid or semiliquid contained in a vessel/reactor, comprising a motor (2) having a shaft (2a) for transmitting a rotary motion, a stirring shaft (3) having a proximal end (3a) and a distal end (3b), an impeller (4) being associated with said distal end (3b), **characterized in that** the device (1) comprises a removable connection element (5) between said motor (2) and said stirring shaft (3).

2. The device (1) according to claim 1, wherein the stirring shaft (3) has a length which can vary depending on the application needs of the mixing/stirring device (1), so that the impeller (4) can mix the liquid or semiliquid contained in the vessel/reactor, for example in proximity of the bottom of the latter.

3. The device (1) according to claim 1 or 2, wherein the stirring shaft (3) comprises a body (3c) extending between said proximal end (3a) and said distal end (3b).

4. The device (1) according to any one of claims 1 to 3, wherein the proximal end (3a) of the stirring shaft (3) is truncated conical in shape, and it is configured to be coupled with the connection element (5) .

5. The device (1) according to claims 3 and 4, wherein the proximal end (3a) is connected to the body (3c) of the stirring shaft (3) through an annular portion (3d), having a diameter larger than the diameter of the proximal end (3a) base, and through an annular groove (3e) placed between the annular portion (3d) and the body (3c).

6. The device (1) according to any one of claims 1 to 5, wherein a flange (11) is associated with the proximal end (3a), the flange (11) being preferably screwed onto the annular portion (3d) up to abutting against the body (3c), and wherein the flange (11) comprises holes (11a) for fastening to the connection element (5).

7. The device (1) according to claims 5 and 6, wherein the flange (11) is fastened at the threaded annular portion (3d) by screwing.

8. The device (1) according to any one of claims 1 to 7, wherein the connection element (5) comprises a cylindrical body (5a) having a first end (12) and a second end (13), wherein a coupling flange (14) provided with through holes (14a) extends perpendicularly outwards from the second end (13), so that the coupling flange (14) can be coupled to the flange (11) of the proximal end (3a) of the stirring shaft (3) by means of screws (15) introduced through the respective holes (11a, 14a).

9. The device (1) according to claim 8, wherein the cylindrical body (5a) is hollow, and comprises a first cylinder-shaped cavity (16) which opens outwards at the first end (12), and a second truncated cone-shaped cavity (17) which opens outwards with a flare at the second end (13), the first and the second cavities (16, 17) being divided by a septum (18) wherein a threaded through hole (19) is drilled, for introducing a fastening screw (20), wherein the fastening screw (20) is screwed in an axial threaded hole present in turn on the motor (2) transmission shaft (2a), so as to provide for fastening thereto.

10. The device (1) according to claim 8 or 9, wherein the connection element (5) edge at the first end (12) comprises a socket (12a) configured for accommodating a pin (28) for rotational fastening of the motor (2) transmission shaft (2a) to the connection element (5) and therefore to the stirring shaft (3).

11. The device (1) according to any one of claims 1 to 10, wherein the distal end (3b) of the stirring shaft (3) is configured to be coupled with the impeller (4), and comprises a proximal portion (23a), adjacent to the stirring shaft (3), and a distal portion (23b), wherein:
- a radial blind hole (9) is placed at the proximal portion (23a), for introducing a pin (10) for a motion transmission to the impeller (4), and wherein
- the distal portion (23b) comprises an external thread (22) for a nut screw system (27).

12. The device (1) according to claim 11, wherein the impeller (4) comprises a cylindrical element (4a) from which blades (4b) radiate outwards, wherein the blades (4b), preferably three in number, are arranged in an out-of-phase inclined manner to form a helical structure, the cylindrical element (4a) comprising a longitudinal through hole (24), configured for housing the distal portion (23b) of the distal end (3b) of the stirring shaft (3), and a socket (25) for pin (10) accommodation.

13. The device (1) according to any one of claims 1 to 12, wherein the motor (2) is a rotary electric motor able to impart a rotational speed ranging between 800 and 1500 rpm to the transmission shaft (2a).
